# EUROPEAN PATENT SPECIFICATION

(11) **EP 3 452 949 B1**
(45) Date of publication and mention of the grant of the patent: **28.02.2024**
(21) Application number: 16722122.5
(22) Date of filing: 03.05.2016
(51) Int. Cl.: G06K 7/14, G06K 7/10

(54) **COMMUNICATION USING COLOUR ENCODED SEQUENCE OF DIGITS**
KOMMUNIKATION UNTER VERWENDUNG EINER FARBCODIERTEN ZIFFERNFOLGE
COMMUNICATION UTILISANT UNE SÉQUENCE DE CHIFFRES À CODAGE COULEUR

(43) Date of publication of application: 13.03.2019
(73) Proprietor: Payment Technologies S.r.l., 20124 Milan (IT)
(72) Inventor: PARADELLS ASPAS, Josep, 08034 Barcelona (ES); CAMPS MUR, Daniel, 08034 Barcelona (ES); HERRERA ALLOZA, Laura, 08034 Barcelona (ES); HAYES, Jonathan M., 08034 Barcelona (ES)
(74) Representative: Rossi, Ugo
(86) International application number: PCT/EP2016/059943
(87) International publication number: WO 2017/190776

(56) References cited:
- US-A1- 2006 071 077
- US-A1- 2010 110 212
- US-A1- 2013 237 155
- US-A1- 2013 256 395

## Description

The present disclosure relates to secure communications and more specifically to secure communications using colour encoded sequence of digits.

### BACKGROUND

Secure transmission of data is a necessary requirement in multiple scenarios whereby an authenticated user sends sensitive information, such as that relating to identity, payment or certain access privileges. Authentication involves a method of computer access control which a user can pass by successfully presenting several separate authentication stages. A three-form factor authentication may be implemented by users based on: (i) Inherence, that is, who the user is, e.g. based on a biometric identifier such as a fingerprint, iris scan, facial pattern or voice mark etc., (ii) Knowledge, what the user knows, e.g. password, PIN etc. and (iii) Possession, what the user has, e.g. a registered device in their possession.

Security of the data transmitted may be breached immediately following the authentication process given that existing methods mean it is possible for unauthorized individuals, e.g. third parties, to have access to the credentials presented. For example, (NFC) Near Field Communication technology broadcasts information such as credit card details at a POS terminal or other information such as personal data, it is possible to accidentally disclose the data which can be collected by "sniffer" devices. Further, the secure transmission of data must be universally possible from any standard smartphone, regardless of whether it possesses NFC, utilizing the features native to such mobile device. US2010/110212A1 discloses setting information is converted into a plurality of image patterns (22), and the plurality of image patterns (22) are displayed in time sequence according to a predetermined sequence. US2013/256395A1 discloses an apparatus and method for expediting self-checkout at a point-of-sale station, employ a mobile electronic device, e.g., a cellular phone, held and operated by each customer. US2006/071077A1 discloses methods, devices and computer program products that provide for generating a series of visual coded images, such as barcodes that are related to a data set, displaying the series of visual coded images in sequence on a display and capturing and decoding the displayed series of visual images in one continuous process. US2013/237155A1 discloses various approaches for mobile device intercommunication (e.g., digital) as well as various authentication methods. It would be desirable to provide devices and methods that at least partially solve the aforementioned problems.

### SUMMARY

The invention is set out in the independent claims.

In a first aspect a method of securely communicating a colour encoded sequence of digits from a display of a mobile device to a photo-receptor device is disclosed. The method comprises preparing the colour encoded sequence of digits at the mobile device. The sequence of digits may comprise a dynamic token with information to identify the mobile device to the photo-receptor device. Proximity of the photo-receptor device is then identified. The colour encoded sequence of digits is then presented to the photo-receptor device. The sequence of colour-encoded digits may be displayed in the form of flashes of light on the screen of the mobile device. Then, confirmation of reception of the colour encoded sequence of digits at the photo-receptor device is received. Then, confirmation of decoding of the sequence of digits at the photo-receptor device is received. By identifying proximity before the sequence of digits encoded as flashes of coloured light is displayed on the mobile screen, it is possible to ensure a secure transmission of the sequence of coloured light digits to the photo-receptor device as the sequence of digits does not appear on the display until the mobile device is correctly positioned. The sequence of digits may be displayed in a colour encoded format at the display when it is confirmed that the display is in the photo-receptor device's proximity. This may ensure that the sequence of digits is not compromised during its transmission to the photo-receptor device. The information is transmitted as a coloured light signal, which, when entering contact with ambient light, dissipates and therefore it is not possible for it to be captured by a third party.

In some examples, the method may further comprise initiating a pairing connection between the mobile device and the photo-receptor device once the decoding is successful. The pairing connection may be a wireless connection, such as a Bluetooth or a Wi-Fi connection, or a cable connection, e.g. via a USB cable. The pairing connection may only be initiated when the sequence of digits has been successfully decoded. Information in the decoded sequence of digits may then be used for initiating the pairing connection. This may ensure a secure connection between the mobile device and the photo-receptor device.

In some examples the pairing may further comprise actuating on an access module once the decoding takes place. The access module may be a structure, such as a lock, controlling access to an enclosed space or to a parking space. The enclosed space may be a room, a building or a safe.

In some examples the method may further comprise performing a transaction once the pairing is successful. The photo-receptor device may be a vending device. The mobile device may send a request and the photo-receptor device may receive the request to release a product or a service. A secure communication may then be facilitated by the mobile device and between the photo-receptor device and a third-party financial entity to confirm that the request is a valid request. For example, that an account associated with the mobile device has enough funds to cover the cost of requested product or service. When the request is validated, the product or service may be released and a confirmation may be sent to the mobile device.

In some examples, the communication between the photo-receptor device and the third-party financial entity may be implemented through the paired mobile phone. As the mobile device is a trusted device, the communication may be considered a secure communication.

In some examples the vending device may be a full-line vending device, such as a beverage device. In one implementation, the discharge of the beverage may be initiated after the sequence of digits is decoded. This may be the case when the beverages are provided free of charge to certain users of the device, such as employees in a company. In other implementations, a communication initiated by the photo-receptor device and the third-party financial entity may allow for the beverage device to discharge the beverage once an amount corresponding to the beverage is transferred from an account of the user to the machine of the vendor.

In some examples, the photo-receptor device may be a parking metering device. The user may want to access or occupy a parking space for a limited amount of time. Once the sequence of digits is decoded, the parking metering device may initiate a counter either directly or through a communication with a central station to set, e.g. the starting time of the parking space occupation. When the user wants to release the occupied parking space, he may indicate so with a second sequence of digits, that may be similar to the first sequence of digits, to identify the account holder to the parking meter device. The parking meter device, either directly or through a communication to the central station, may then calculate the parking fee. Another communication of the parking metering device may complete the transaction with the transfer of the corresponding fee from a payment account associated with the user.

In some examples, initiating a transaction may comprise requesting authorisation for a transaction based on said decoded sequence of digits, requesting verification of the transaction at the mobile device, and finalising the transaction.

In some examples, to prepare a colour encoded sequence of digits, at least part of the sequence of digits may be requested from a trusted third party. The trusted third party may be a financial institution, licensed E-Money organization or authorizing co-signatory. The requested sequence of digits may then be received at the mobile device. Then, the sequence of digits may be encoded in a colour coded format.

In some examples, requesting a sequence of digits from a trusted third-party may comprise preparing a message comprising at least an identifier of the mobile device and an indicator associated with the photo-receptor device and transmitting the prepared message to the trusted third-party. The indicator may comprise a monetary value for a product or service offered by the photo-receptor device.

In some examples, confirming that the mobile device is placed against the photo-receptor device may comprise receiving a signal from one or more sensors of the mobile device. The one or more sensors may be one or more of an accelerometer, a proximity sensor, a magnetometer, an orientation sensor and a light intensity sensor. For example, the light intensity sensor may provide a low light intensity signal, indicating that the sensor is covered or that the mobile device is placed against a flat surface. Then the accelerometer may sense that the device is not moving. The magnetometer and/or the proximity sensor may sense that, e.g. an object, such as a metallic object, may be in contact with the mobile device. The orientation sensor may indicate that the device is oriented appropriately when placed against the photo-receptor device. The combination of some or all of the signals may provide enough certainty that the device is placed against the photo-receptor device, or at least that the display may not transmit light inappropriately.

In some examples, displaying the sequence of digits in a colour encoded format at a display of the mobile device may comprise displaying one or more sequences of one or more colours at one or more predetermined areas of the display. The number of sequences and colours may depend on the amount of information required to be transmitted, the time that the communication may require, the size of the device, the flash rate of the display and the reading rate of the photo-receptors. In the simplest implementation, one sequence of one colour at a time may be displayed.

The sequence may implement a series of on-off lights that can be directly understood by the photo-receptor device. In another implementation, one sequence of a plurality of colours may be displayed. Each colour of the sequence may represent a character or a string. In yet another implementation, a plurality of sequences of a plurality of colours, respectively, may be displayed. Each sequence may be implemented at a separate area of the display. The encoded may be implemented not only by the colours of the sequences but also by the position of the colour, i.e. the sequence to which the colour belongs.

The one or more colours may occupy a predetermined area of the display, e.g. an area close to a corner of the display, so that it may be easier to align with the photo-receptors.

In some examples, decoding the sequence of digits may comprise identifying the one or more sequences of one or more colours, comparing the identified sequences of colours with stored reference sequences of colours and translating the identified sequences of colours based on the stored reference sequences of colours. The photo-receptor device may comprise a memory to store the reference sequences and/or colours.

In some examples, the photo-receptor device may actuate on the display to determine the area of the display where the one or more colours are displayed. The photo-receptor device may comprise one or more finger-like actuators that may tap on the display to define an area of haptic response on the display. The mobile device may, in response to said tapping display the sequence of digits in the area defined by the actuators. This may allow the sequence of digits to be aligned with the photo-receptors so that the sequence of digits may be read by the photo-receptor device.

In some examples, reading the colour encoded sequence of digits using the photo-receptor device may comprise identifying the position of the colour encoded sequence of digits and identifying a sequence of one or more colours using one or more photo receptors. The sequence of one or more colours may correspond to a coded message. The photo-receptor device may hold the key to the code in order to interpret the message.

In some examples, identifying the position of the colour encoded sequence of digits may comprise identifying the position of the mobile phone with respect to the photo-receptor device. In some implementations, this may be done by identifying placement of the mobile phone at a predetermined resting area of the photo-receptor device. Additionally, identifying the position of the mobile phone may further comprise identifying the orientation of the mobile device.

In another aspect a mobile device to communicate a colour encoded sequence of digits to a photo-receptor device is disclosed. The mobile device may comprises a communication module, a colour encoding module to receive a sequence of digits and generate a colour encoded sequence corresponding to the received sequence of digits, and a display to present the colour encoded sequence to the photo-receptor device.

In yet another aspect a photo-receptor device to receive a colour encoded sequence of digits from a mobile device is disclosed. The photo-receptor device may comprise one or more optical sensors, to receive the colour encoded sequence from the mobile device, and a decoder, to decode the colour encoded sequence and generate the sequence of bits.

In yet another aspect, a secure communication system is disclosed. The secure communication system may comprise a mobile device, according to examples disclosed herein, a photo-receptor device, to receive a product or service request from the mobile device and an authorization network, to receive an authorization request from a mobile device and authorize a user or a payment to the photo-receptor device in response.

In yet another aspect, a computing device is disclosed. The computing device may comprise a memory and a processor. The memory may store computer program instructions executable by the processor, said instructions comprising functionality to execute a method of securely communicating a colour encoded sequence of digits from a display to a photo-receptor device according to examples disclosed herein.

In yet another aspect, a computer program product is disclosed. The computer program product may comprise instructions to provoke that a computing device implements a method of securely communicating a colour encoded sequence of digits from a display to a photo-receptor device according to examples disclosed herein.

The computer program product may be embodied on a storage medium (for example, a CD-ROM, a DVD, a USB drive, on a computer memory, cloud-based storage unit or on a read-only memory) or carried on a carrier signal (for example, on an electrical or optical carrier signal).

The computer program may be in the form of source code, object code, a code intermediate source and object code such as in partially compiled form, or in any other form suitable for use in the implementation of the method. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

### BRIEF DESCRIPTION OF THE DRAWINGS

Particular embodiments of the present invention will be described in the following by way of non-limiting examples, with reference to the appended drawings, in which:
Fig. 1 shows a flow chart of a method of securely communicating a sequence of digits encoded as coloured light to a photo-receptor device, according to an example;
Fig. 2 illustrates an example method of pairing using a colour coded sequence of digits;
Fig. 3 schematically illustrates a system for secure communication using a colour coded sequence of digits, according to an example.

### DETAILED DESCRIPTION OF EMBODIMENTS

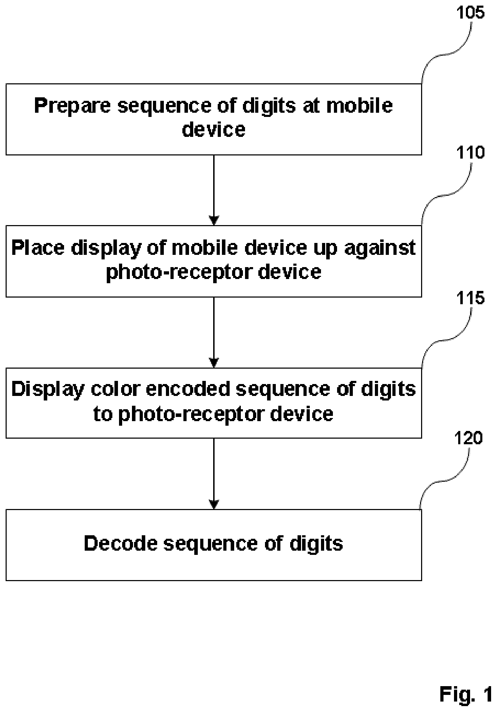

Fig. 1 shows a flow chart of a method of securely communicating a sequence of digits to a photo-receptor device, according to an example. In block 105 a sequence of digits is prepared at a mobile device (e.g. a smartphone). The sequence of digits may comprise identification information of the device and/or of the owner of the device and it may also comprise information related to a transaction. This information may comprise an amount corresponding to available funds or credit in an account belonging to the user. It may also comprise information about a product or a service the user wishes to acquire. The sequence of digits may be a text string. The sequence of digits may be prepared by the mobile device based on information already present at the mobile device or based on information received from a remote secure location through a communication link. Alternatively, part or the entire sequence of digits may be prepared at the remote secure location based on a user request and transmitted to the mobile device via the communication link. The sequence of digits may then be encoded at the mobile device in a colour coded format.

In block 110, the display of the mobile device may be placed up against the photo-receptor device. The photo-receptor device may comprise one or more light sensors configured to detect one or more light or light sequences emitted by the display of the mobile device. The light or light sequences may be in one or more colours and the photo-receptor device may be configured to distinguish between the one or more colours. The mobile device may be configured to identify correct placement of the display up against the one or more light sensors of the photo-receptor device. For example, the mobile device may identify correct placement based on one or more signals received by one or more mobile device sensors, respectively. Accordingly, the photo-receptor device may comprise visual or physical patterns to facilitate correct placement of the display up against the photo-receptor device.

In block 115, once the display is placed correctly up against the photo-receptor device, the mobile device may begin displaying the light or colour sequence. Each light or colour and each sequence of lights or colours may correspond to an encoded signal. For example, each light or colour sequence may correspond to a sequence of bits, bytes or characters.

In block 120, the photo-receptor device may decode the sequence of digits once the light or colour sequence is completed. The decoded signal may correspond to the sequence of digits prepared at the mobile device.

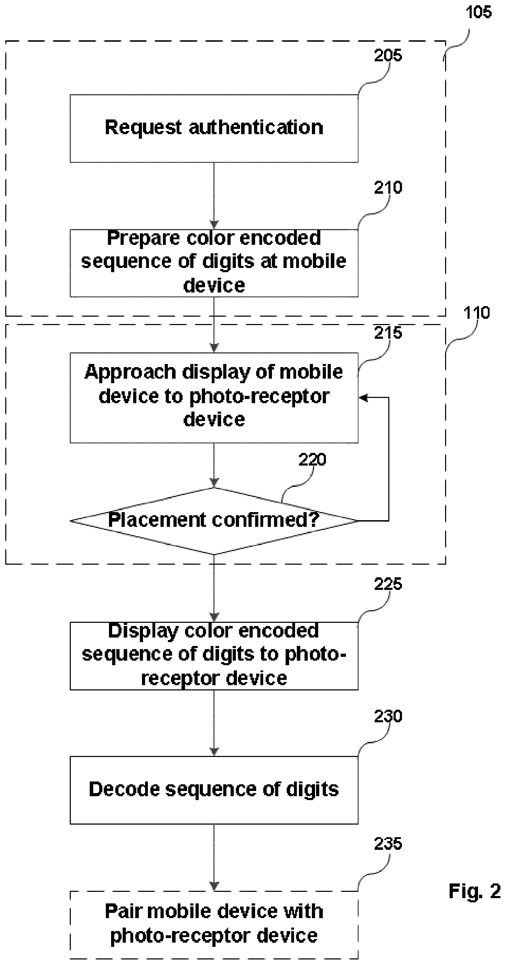

Fig. 2 illustrates an example method of pairing using a colour coded sequence of digits. A mobile device may wish to pair with a photo-receptor device, e.g. a vending device. In block 205 an authentication is requested from a remote secure source. A user may send a request from a user device to the remote secure source. The request may include information about the user, the user device and/or a transaction the user wishes to perform. For example, the user may wish to present the sequence of digits at a vending machine. The vending machine may be appropriately equipped to read and decode the sequence of digits. The remote secure source may be a trusted third party that may validate the user request and prepare the authentication. Then a sequence of digits may be prepared that may include part or all of the information included in the request as well as information related to the user device (e.g. MAC address, operating system etc.). For example, if the user wishes to purchase a product or a service, the colour encoded sequence of digits may comprise data representing the value of the product or service the user wishes to purchase. In block 210, the mobile device may process the sequence of digits and prepare it as a colour encoded sequence of digits. In case the sequence of digits is in the raw un-encoded format, preparing the sequence of digits may comprise encoding the text string in one or more sequences of one or more colours. Optionally, the text string may be encrypted using any known encryption technique prior to being encoded in the colour encoded format. If the sequence of digits is already encrypted (e.g. by an app at the mobile device) then the mobile device may either encode the encrypted sequence of digits directly in the colour encoded format or decrypt it and encode the decrypted message in the colour encoded format. This may depend on assumed decryption capabilities of the photo-receptor device and the level of security intended. For example, if a high level of security is intended, the sequence of digits may remain encrypted until it is decoded and decrypted at the photo-receptor device. When the sequence of digits is prepared in a colour encoded format it may be considered ready to be displayed at a display of the mobile device. However, as the displayed sequence of digits may be apprehended by an onlooker, the mobile device may withhold the display of the sequence of digits until the display is placed up against the photo receptors of the photo-receptor device. If the mobile device is placed with the screen of its display in contact with the photo-receptor device, i.e. with its display facing against the photo receptors, it may not be possible for shoulder surfers to capture the colour encoded light sequence and the communication of the sequence of digits from the mobile device to the photo-receptor device may be considered secure. The mobile device may, therefore, display the colour encoded sequence only when it has ensured that the display is not in common view, and is within proximity of the receiving photo-receptor. In block 215, the display of the mobile device may be approached to the photo-receptor device. The mobile device may recognize the movement by signals issued by various sensors of the mobile device. For example, an accelerometer sensor may sense acceleration at first and deceleration at last after the user has instructed the device to display the sequence of digits. Once the accelerometer senses no acceleration or deceleration, it may indicate that the mobile device is not moving, an indication that it may have been placed up against the photo-receptor device. However, the signal from the accelerometer alone may not be sufficient to reach that conclusion as the mobile device may indeed have been placed up against the photo-receptor device, nevertheless from the opposite side, i.e. with the display facing outwards. Therefore, a second sensor, e.g. an ambient light sensor, may be used to indicate if the side of the display is receiving light. This, combined with the measurement of the accelerometer may give a good indication that the display is not moving and facing an object. However, this may still not be sufficient to indicate that the device is up against the photo-receptor device. To improve accuracy, a third sensor, e.g. a magnetometer may be used. It may measure changes in the magnetic field and generate a signal in response. The mobile device may be configured or trained to identify the particular change of the magnetic field when the magnetometer approaches the photo-receptor device. The combination of the signals from the three sensors used in the example described above may provide a relatively safe indication that the display may have been placed up against the photo-receptors of the photo-receptor device. The combination of sensors described before is given as an example. Other combinations of sensors may be used, depending on the device configuration and the respective application. The device, in block 220, may check if a correct placement of the display up against the photo receptors has been performed. This may include a comparison of the signal values emitted from the various sensors with pre-established values stored at the mobile device. If placement is not confirmed the mobile device may inform the user with any suitable means. For example, it may emit a characteristic sound or light or it may vibrate. When placement is confirmed the mobile device may react accordingly to inform the user that it is ready to start displaying the digits encoded as a sequence of coloured light. In block 225, the mobile device may display the colour encoded sequence of digits at its display. The photo-receptor device may read the colour encoded sequence of digits and decode it in block 230. When the decoding is complete, the photo-receptor device may inform the user about the correct reception of the sequence of digits. The photo-receptor device may comprise a display for that purpose. Alternatively, it may emit a sound or simply perform the required supply of the product or service requested by the user. For example, if the purpose of the colour encoded sequence of digits communication is the acquisition of an article from a vending machine, the vending machine may simply release the article once the sequence of digits is decoded. In case the communication involves the purchase of a product or service, the sequence of digits may merely serve as identification of the user or user device to the photo-receptor device indicating the availability of funds or credit for the purchase of the product or service. Then, the photo-receptor device (vending machine) may communicate with a financial entity to complete the transaction and release the product or service. The financial entity may be the same as the trusted third party that prepared the sequence of digits. Furthermore, the communication between the vending machine and the financial entity may be performed through a communication line that may be established through the mobile device. Since the mobile device has been identified by the photo-receptor device and is considered a trusted device, a pairing process between the mobile device and the vending machine may be performed, in block 235. The pairing process may be implemented between e.g. a wireless module of the mobile device and a corresponding wireless module of the vending machine. For example, the wireless modules may be Wi-Fi, Bluetooth or similar type of wireless modules. Alternatively, the mobile device may be physically connected, e.g. with a USB cable, to the vending machine to perform the pairing process. Once the two devices are paired, the vending machine may use the mobile device as a communication device to connect to the financial entity and finalise the transaction. When the transaction is finalised, the vending machine may release the product or service requested by the user. The user may receive a confirmation of the transaction from the vendor in the form of a receipt. Additionally, the user may optionally receive a message from the financial entity requesting confirmation of the transaction that the vending machine has requested to perform at the financial entity.

As all the communications are performed through the mobile device, the transaction may be considered secure and no information about the user may be available to any shoulder surfers at the vending machine or in its proximity.

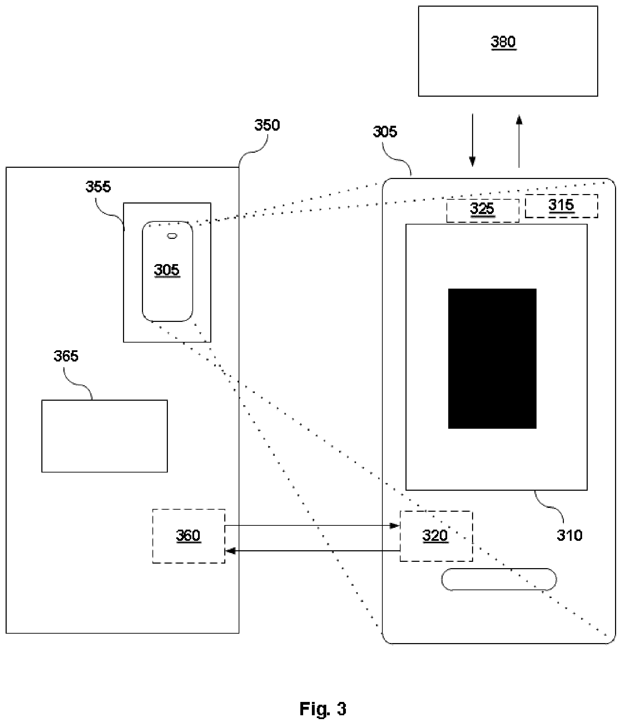

Fig. 3 schematically illustrates a system for secure communication using colour coded sequence of digits, according to an example. The system may comprise a mobile device 305, a photo-receptor device 350 and a remote trusted third party 380. The mobile device 305 may comprise a display 310, a first communication module 315 and a second communication module 320. Furthermore, the mobile device 305 may comprise a sensor module 325. The mobile device 305 may be a wireless communication device such as a mobile device, a smartphone, a tablet, a personal computer or any other mobile communication device equipped with a display and communication modules and sensors. The photo-receptor device 350 may comprise a photo-receptor module 355, a photo-receptor communication module 360 and an interaction module 365. The photo-receptor module 355 may comprise one or more photo-sensitive sensors. The photo-receptor communication module 360 may be similar to, i.e. configured to connect with, the second communication module 320 of the mobile device 305. The interaction module 365 may be an interactive display, a user interface module, an access module etc. In an example scenario, a user, e.g. the proprietor of the mobile device 305 may wish to purchase a product or service from the photo-receptor device 350. The photo-receptor device 350 may be a vending machine, e.g. an infusion machine such as a coffee machine. The mobile device 305 may be a mobile device, e.g. a smartphone. The user may approach the coffee machine and read a number corresponding to the price of the infusion, e.g. coffee, the user wishes to purchase. The price may be input to the vending machine or to the mobile device by the user or automatically, e.g. by reading a QR code at the coffee machine corresponding to the item and its price. When the price is input in the mobile device, the user may request an authorization from the remote trusted third party, e.g. from a financial entity where the user has associated funds or credit. The mobile device 305 may comprise an application (app) for sending a request message to the financial entity, requesting the authorization. The request message may include user information, for identifying the user to the financial entity, product information, such as the item to be purchased, vendor information (i.e. the proprietor of the coffee machine) and price information (i.e. the amount of the item to be purchased). The financial entity may prepare the authorization which may include some or all of the information included in the request. For example, the authorization may not include user information as the vendor need not know who the user of the mobile device is. For example, the sequence of digits may include the product information, the vendor information and a funds confirmation, i.e. that the bearer of the sequence of digits has adequate funds or credit for purchasing the requested item. A sequence of digits may then be prepared in a colour encoded format. For example, the information to be included in the sequence of digits may be translated to a sequence of colours. A sequence of colours may include one or more colours flashing at predetermined time intervals. The colour and the flashing time may correspond to a character or string of characters. For example, a white colour flashing for 10msec may correspond to the letter A.

When the sequence of digits has been colour encoded, the user may approach the mobile device to the photo-receptor module of the coffee machine. The photo-receptor module may comprise a base or a stand so that the mobile device may rest on the photo-receptor device without the user needing to hold it. The app of the mobile device may collect sensor data from the sensor module 325 to identify when the display 310 has been placed against the photo-receptor module 355 of the coffee machine. When the correct placement identification takes place, the app may display the colour encoded sequence of digits. The photo receptor module 355 may read the colour encoded sequence of digits and decode it. It may then pair with the mobile device and initiate a communication through the mobile device with the financial entity 380 to finalise the transaction and release the item requested, i.e. the coffee. The photo-receptor communication module 360 may receive a request from the photo-receptor module 355 to pair with the second communication module 320. The pairing request may include pairing information that was included in the colour encoded sequence of digits. The photo-receptor communication module 360 may then pair with the second communication module 320. From then on, the photo-receptor device (350) may send a request to the first communication module 315 of the mobile device to establish a connection with the financial entity 380. When the connection is established, the photo-receptor device (350) may transmit a transaction request to the financial entity. The transaction request may comprise a request to transfer an amount from the funds or credit of the user associated with the received sequence of digits. Therefore, the transaction request may include at least a user identifier and a vendor identifier. When the financial entity receives the transaction request it may perform the transfer or, optionally, forward the request to the user's mobile device for confirmation before performing the transfer. Once the transfer is completed it may send a confirmation message to the photo-receptor device 350 (and optionally to the mobile device 305). The photo-receptor device 350 may receive the confirmation and may release the requested item (e.g. coffee) through the interaction module 365. When the requested item is picked-up, the photo-receptor device may unpair from the mobile device and the transaction may be considered complete.

In another example scenario, a purchase transaction is performed at a vending machine. The vending machine may provide a product or a service. For example, the vending machine may provide a product, such as a food or a beverage, or a service. For example the vending machine may be a parking meter providing a parking service. The vending machine may be provided with a photo-receptor device and a corresponding processing module set up for its product or service vending purpose, so as to comprise the functionality of the vending machine it corresponds. For example, the vending machine may have a metering module when the vending machine acts as a parking meter.

During an operation mode of an example transaction there may be three distinct phases. During the first phase a user may begin a transaction. The user may initiate the transaction from an app on the user's mobile device that may be associated to a cloud-based wallet. The cloud based wallet may be a bank wallet or any other type of wallet, for example mobile carrier operated or any other third-party.

During the second phase, authentication may take place. The user may log in to the app and may be securely authenticated by a payment network which may or may not involve Multi-Factor Authentication (i.e. a three-form factor authentication to determine if the user access is legitimate) and may complete payment in three ways:
a. - From a prepaid, stored-value balance in the user's cloud-based wallet, using any available funds from a prior top-up;
b. - By authorising the user's bank to provide the payment network with access to funds from the user's bank account (for example, an account access according to the "Access to the Account" (XS2A), in accordance with the EU Payment Services Directive (PSD2))
c. - As an instant payment transaction within the SCTIns. scheme, the European Union Single Euro Payments Area (SEPA) Credit Transfer Faster Payments Framework, whereby money is sent instantly from a bank account to a mobile number, email address or other identifier associated with the beneficiary's bank account, whereby it is deposited in the space of a few seconds.

If the vending machine is a parking meter, a timer may begin at this point (so there would be no need to collect a ticket).

The third phase may be the interaction phase. The user may select to "pay" (for example by tapping a button within the application) or open a specific tab in the wallet that may indicate the means of payment. In this case the user may select to use a digit encoded coloured light communication.

Communication between the mobile device and the vending machine may be established via a wireless protocol, such as Bluetooth. In order to set up such a communication without ambiguities, information from the mobile device (e.g. smartphone) may be transmitted to the vending machine using a sequence of coloured light generated by the mobile device's display and be received by one or several optical sensors on the vending machine.

Once the application on the mobile device is active, the user may place the display of the mobile device against the optical sensor to initiate communication. The colour sequence may automatically start transmitting once the mobile device is held in the correct position for the colour communication. In order to determine the correct position of the device, one or several additional sensors of the mobile device may be employed. For example:
- An accelerometer on the mobile device may determine that the mobile device is vertically positioned
- A proximity sensor on the mobile device may determine that the mobile device is in the vicinity (in the range of millimetres) to the vending machine.
- A magnetometer on the mobile device may measure the magnetic field coming from a magnet located close to the optical sensor(s) and help to determine if the mobile device is close to the location of the optical sensor(s).
- A haptic touch sensor, or an "artificial finger" contact, on the vending machine, when in contact with the display of the mobile device, may confirm the close proximity of the mobile device to the vending machine and helps the mobile device to figure out the position of the optical sensor.

These sensors may be used individually or together, in a cooperative manner, with a positive result.

When the app on the mobile identifies the mobile device in the correct position it may automatically start transmitting data to the vending machine reader as a sequence of changing colours. The vending machine may be waiting for a certain pattern of colours as a start sequence to begin decoding colours.

An example set of colours may be described in the following table:

**Table 1 - R, G and B stands for the basic colours Red, Green and Blue respectively. 0 means no contribution and 255 maximum contribution.**

| | **R** | **G** | **B** |
|---|---|---|---|
| **Black** | 0 | 0 | 0 |
| **Blue** | 0 | 0 | 255 |
| **Green** | 0 | 255 | 0 |
| **Cyan** | 0 | 255 | 255 |
| **Red** | 255 | 0 | 0 |
| **Magenta** | 255 | 0 | 255 |
| **Yellow** | 255 | 255 | 0 |
| **White** | 255 | 255 | 255 |

As a total of eight colours may be defined in the example, encoding may be implemented in octal according to the following example digit assignment:

**Table 2 - Encoding in octal of different colours**

| Colour | Number |
|---|---|
| Blue | 0 |
| Green | 1 |
| Cyan | 2 |
| Red | 3 |
| Magenta | 4 |
| Yellow | 5 |
| White | 6 |
| Black | 7 |

In the example implementation, the colours white and black may be used as control digits. Therefore they may not be used for data encoding. As a result, only six colours may be available. With these 6 colours encoding in hexadecimal encoded data may be used, according to the example. The mapping between sextal (i.e. the octal encoding minus the 2 colours not used for encoding) and hexadecimal is the following:

**Table 3 - Encoding of hexadecimal data with colours**

| Hexadecimal | Sextal | Hexadecimal | Sextal |
|---|---|---|---|
| 0 | 34 | 8 | 13 |
| 1 | 01 | 9 | 14 |
| 2 | 02 | A | 15 |
| 3 | 03 | B | 20 |
| 4 | 04 | C | 21 |
| 5 | 05 | D | 23 |
| 6 | 10 | E | 24 |
| 7 | 12 | F | 25 |

As the timing on the mobile device may not be accurate it may result in an uncertainty for the optical reader to differentiate from one single digit to two digits when colours are repeated. So the repetition of colours may be avoided in the transmission. Two example techniques may be used at the same time: One on the coding and another on the transmission. The first technique may be applied during coding. In table 3 it can be seen that the hexadecimal digits 0, 7 and D may be coded with 34, 12 and 23, instead of 00, 11 and 22 (which would be the logical encoding according to the other values on the table). The other technique used may be applied during transmission. When data is transmitted a control code (for example the colour white) may be used to separate equal colours. For example if 1 and 6 are to be transmitted consecutively, instead of the colours 01 and 10 that may result with two consecutive 1s, the colour sequence to be used may be 01610. That is, a white colour may be transmitted between two green colours.

According to the example encoding rules presented above, a sequence of two values, such as 0x1 0xbcf5bc87, may be encoded as:
01 20 21 25 05 20 21 13 12.

But the sequence of colours transmitted may be:
01 20 21 25 05 20 21 6 13 12
where the colour six (white) is used to separate the two consecutive 1s

As the colour sensor may need some time to decode the colour correctly (e.g. 14ms) and reading may not be synchronised with the transmission, the colour may need to be maintained for a duration of 70ms. The sequence transmitted may then be:

That sequence might be erroneously received as

In some transitions the colour decoded is not the correct one. In the worst case, 3 identical colours are going be decoded so any colour seen at the transition between digits is not going to be considered. According to that, the sequence received will be:
0120212505202161312

Depending on the mobile device's capabilities (for example, having or not Bluetooth Low Energy, e.g. BLE 4.2) and the operating system (for example, Android OS older than 6.0 or other operating system) two procedures to setup a communication may be defined, one using classical Bluetooth and another one using Bluetooth Low Energy.

Using older Bluetooth the parameters sent by light may be the procedure type, the MAC Address and the Encryption KEY. For example:
Procedure type: 1
MAC Address: 0xbcf5ac872046
Encryption KEY: 0x688596bd

Once the vending machine knows the encryption key and the MAC address of the mobile device it may initiate or accept a procedure to pair the two devices without the user intervention and establish a serial port communication (SSP) on top of the secure Bluetooth link created. At this point the mobile device and the payment system may have established a secure serial communication.

Using Bluetooth Low Energy the parameters sent by light may be the procedure type, the advertisement payload and the encryption key. For example:
Procedure type: 2
Advertisement Payload: 0x4cf53c87a04b
Encryption KEY: 0x688596bd

Once the vending machine receives the advertisement payload it may use it as part of the key in the Bluetooth Low Energy advert message the vending machine may be transmitting. This may be recognized by the mobile device and it may start setting up a connection. The mobile device may ask for a serial port on top of the Bluetooth Low Energy and establish a communication, protecting the communication with the encryption key provided.

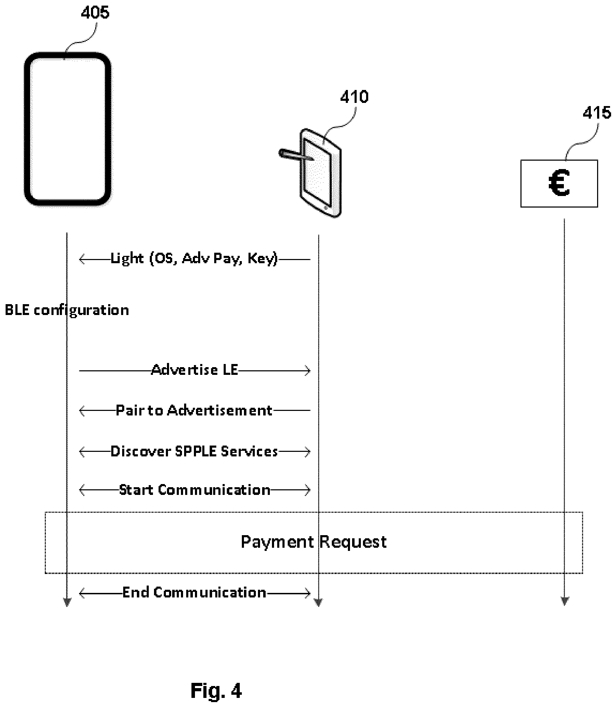

Fig. 4 illustrates a vending scenario according to an example. A mobile device prepares a colour coded sequence of digits comprising the operating system, an advertisement payload and an encryption key and transmits it using the display to the vending machine. The vending machine may be equipped with photo-receptors and may use a Bluetooth Low Energy protocol. The vending machine 405 may then send an advertise LE signal to the mobile device 410. The mobile device 410 may receive the advertised LE signal and send a Pair to Advertisement signal to the vending machine 405. Then any Serial Port Profile Low Energy (SPPLE) Services may be discovered. Then a communication may start and the vending machine may send a payment request through the mobile device to the mobile device owner's associated payment network 415 that may retrieve funds from e.g. a bank account of the user. The communication may end when the vending machine receives the payment and the article is released to the user.

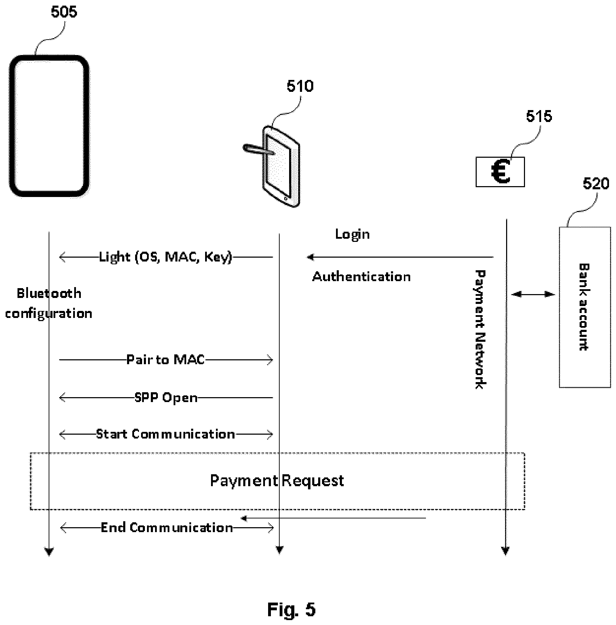

Fig. 5 illustrates a vending scenario according to another example. A user intending to buy an article, e.g. from a vending machine 505, receives an authentication from a payment network 515 associated with the user. The authentication may be received at the mobile device 510 of the user. Then the mobile device 510 may prepare a colour coded sequence of digits. The mobile device may comprise an app and the sequence of digits may comprise the operating system (OS), the MAC address of the mobile device and an encryption key (KEY). In this scenario a classical Bluetooth connection is anticipated. Then the colour coded sequence of digits may be transmitted to the vending machine. The vending machine may comprise a light-sensor and a communication module (e.g. a Bluetooth module). Once the colour coded sequence of digits is received and decoded, the vending machine may initiate a pairing process using the MAC address included in the sequence of digits. The mobile device may then open an SPP port and then the communication between vending machine and mobile device may begin. The vending machine may then send a payment request to the mobile device owner's associated payment network 515 that may retrieve funds from e.g. a bank account 520 of the user.

Alternatively, the vending machine may send the payment request to the payment network without the need for the user to authenticate. This may be the case if the user has previously authorized the bank to e.g. accept small payment requests.

The communication may end when the vending machine receives the payment and the article is released to the user.

Although only a number of particular embodiments and examples have been disclosed herein, it will be understood by those skilled in the art that other alternative embodiments and/or uses and obvious modifications and equivalents thereof are possible. Furthermore, the disclosure covers all possible combinations of the particular embodiments described. Thus, the scope of the disclosure should not be limited by particular embodiments.

Further, although the examples described with reference to the drawings comprise computing apparatus/systems and processes performed in computing apparatus/systems, the disclosure also extends to computer programs, particularly computer programs on or in a carrier, adapted for putting the system into practice.

## Claims

1. A method of securely communicating a colour encoded sequence of digits, which digits comprise encoded information, from a display of a mobile device to a photo-receptor device, comprising preparing (210) the colour encoded sequence of digits at the mobile device, the method is **characterized by**:
identifying (110) proximity, by a proximity sensor of the mobile device, of the photo-receptor device by determining that the mobile device is in the vicinity of the photo-receptor;
presenting (225) the colour encoded sequence of digits at the display of the mobile-device in the form of light flashes at predetermined time intervals after identifying proximity of the photo-receptor device;
initiating (235) a pairing connection between the mobile device and the photo-receptor device once decoding (230) by the photo-receptor device of the colour encoded sequence of digits is successful, and performing a transaction once the pairing is successful; and wherein communicating to the photo-receptor device comprises communicating to a vending device.

2. The method according to claim 1, wherein the pairing connection is a wireless connection.

3. The method according to claim 2, wherein the wireless connection is a Bluetooth connection.

4. The method according to claim 1, further comprising
sending a request to release a product or a service;
facilitating a secure communication between the photo-receptor device and a remote financial entity to confirm that the request is a valid request;
receiving a confirmation of releasing the product or service when the request is validated.

5. The method according to claim 4, wherein the communication between the photo-receptor device and the third party financial entity is implemented through the paired mobile device.

6. The method according to any of the above claims, wherein preparing a colour encoded sequence of digits comprises:
requesting at least part of the sequence of digits from a trusted third party;
receiving the at least part of the sequence of digits at the mobile device;
encoding the sequence of digits in a colour coded format.

7. The method according to claim 6, wherein requesting a sequence of digits from a trusted third party comprises:
preparing a message comprising at least an identifier of the mobile device and an indicator associated with the photo-receptor device;
transmitting said message to the trusted third party.

8. The method according to claim 7, wherein said indicator comprises a monetary value for a product or service offered by the photo-receptor device.

9. A mobile device (305) to communicate a colour encoded sequence of digits, which digits comprise encoded information, to a photo-receptor device (350), the mobile device comprises $
a communication module (320) for implementing a pairing process between the mobile device and the photo-receptor device (350) and a colour encoding module to receive a sequence of digits and generate a colour encoded sequence corresponding to the received sequence of digits, the mobile device (305) is **characterized by**:
a proximity sensor (325) adapted to identify proximity of the photo-receptor by determining that the mobile device (305) is in the vicinity of the photo-receptor; and
a display (310) presenting the colour encoded sequence to the photo-receptor device (350) in the form of light flashes at predetermined time intervals after proximity of the photo-receptor has been identified by the proximity sensor,
wherein the mobile device accepts or initiates the pairing connection with the photo-receptor device once decoding by the photo-receptor device of the colour encoded sequence of digits is successful.

10. The mobile device according to claim 9, wherein the communication module (320) is adapted (360) to initiate a pairing connection with the photo-receptor device.

11. A photo-receptor device (350) to receive a colour encoded sequence of digits which digits comprise encoded information, from a mobile device (305) in the form of light flashes at predetermined time intervals, comprising a communication module (360) for implementing a pairing process between the photo-receptor device and the mobile device, the photo-receptor is **characterized by**
one or more optical sensors (355) adapted to receive a colour encoded sequence from the mobile device after proximity of the photo-receptor is identified by a proximity sensor of the mobile device by determining that the mobile device is in the vicinity of the photo-receptor;
a decoder adapted to decode the colour encoded sequence and generate a sequence of bits, and
a communication module (360) adapted to initiate a pairing connection with the mobile device when the colour encoded sequence is decoded, and
wherein the photo-receptor device comprises a vending device

12. A secure communication system, comprising:
a mobile device (305) according to any of claims 9 to 10,
a photo-receptor device, to receive a product or service request from the mobile device; and
an authorization network, to receive an authorisation request from the mobile device and authorize a user or a payment to the photo-receptor device in response.

13. The secure communication system according to claim 12, wherein the photo-receptor device is a vending machine and the product or service request is a request to buy a product or a service and the authorization network is a payment network (515).

## Patentansprüche

1. Verfahren zum sicheren Kommunizieren einer farbcodierten Ziffernfolge, deren Ziffern codierte Informationen umfasst, von einer Anzeige einer mobilen Vorrichtung zu einer Fotorezeptorvorrichtung, Vorbereiten (210) der farbcodierten Ziffernfolge an der mobilen Vorrichtung umfassend,
wobei das Verfahren **gekennzeichnet ist durch**:
Identifizieren (110) einer räumlichen Nähe, **durch** einen Näherungssensor der mobilen Vorrichtung, der Fotorezeptorvorrichtung **durch** Bestimmen, dass die mobile Vorrichtung in der Umgebung des Fotorezeptors ist;
Darstellen (225) der farbcodierten Ziffernfolge auf der Anzeige der mobilen Vorrichtung in der Gestalt von Lichtblitzen in vorbestimmten Zeitintervallen, nach Identifizieren einer räumlichen Nähe der Fotorezeptorvorrichtung;
Einleiten (235) einer gepaarten Verbindung zwischen der mobilen Vorrichtung und der Fotorezeptorvorrichtung, wenn Decodieren (230) **durch** die Fotorezeptorvorrichtung der farbcodierten Ziffernfolge einmal erfolgreich ist, und Durchführen einer Transaktion, wenn das Paaren einmal erfolgreich ist; und wobei Kommunizieren an die Fotorezeptorvorrichtung Kommunizieren an eine Verkaufsautomatenvorrichtung umfasst.

2. Verfahren nach Anspruch 1, wobei die gepaarte Verbindung eine drahtlose Verbindung ist.

3. Verfahren nach Anspruch 2, wobei die drahtlose Verbindung eine Bluetooth-Verbindung ist.

4. Verfahren nach Anspruch 1, weiterhin Folgendes umfassend
Senden einer Anfrage, ein Produkt oder einen Dienst freizugeben;
Unterstützen einer sicheren Kommunikation zwischen der Fotorezeptorvorrichtung und einer entfernten Finanzentität, um zu bestätigen, dass die Anfrage eine gültige Anfrage ist;
Empfangen einer Bestätigung einer Freigabe des Produkts oder des Diensts, wenn die Anfrage validiert ist.

5. Verfahren nach Anspruch 4, wobei die Kommunikation zwischen der Fotorezeptorvorrichtung und der fremden Finanzentität durch die gepaarte mobile Vorrichtung implementiert wird.

6. Verfahren nach einem der obenstehenden Ansprüche, wobei Vorbereiten einer farbcodierten Ziffernfolge Folgendes umfasst:
Anfragen mindestens eines Teils der Ziffernfolge von einem vertrauenswürdigen Dritten;
Empfangen des mindestens einen Teils der Ziffernfolge an der mobilen Vorrichtung;
Codieren der Ziffernfolge in einem farbcodierten Format.

7. Verfahren nach Anspruch 6, wobei Anfragen einer Ziffernfolge von einem vertrauenswürdigen Dritten Folgendes umfasst:
Vorbereiten einer Nachricht, welche mindestens eine Kennung der mobilen Vorrichtung und einen Indikator umfasst, welcher der Fotorezeptorvorrichtung zugeordnet ist;
Übertragen der Nachricht an den vertrauenswürdigen Dritten.

8. Verfahren nach Anspruch 7, wobei der Indikator einen Geldwert für ein Produkt oder einen Dienst umfasst, welcher von der Fotorezeptorvorrichtung angeboten wird.

9. Mobile Vorrichtung (305), um eine farbcodierte Ziffernfolge, deren Ziffern codierte Informationen umfassen, an eine Fotorezeptorvorrichtung (350) zu kommunizieren, wobei die mobile Vorrichtung Folgendes umfasst
ein Kommunikationsmodul (320) zum Implementieren eines Paarungsprozesses zwischen der mobilen Vorrichtung und der Fotorezeptorvorrichtung (350) und ein Farbcodiermodul, um eine Ziffernfolge zu empfangen und eine farbcodierte Folge zu erzeugen, welche der empfangenen Ziffernfolge entspricht, wobei die mobile Vorrichtung (305) **gekennzeichnet ist durch**:
einen Näherungssensor (325), welcher eingerichtet, um räumliche Nähe des Fotorezeptors **durch** Bestimmen zu identifizieren, dass die mobile Vorrichtung (305) in der Umgebung des Fotorezeptors ist; und
eine Anzeige (310), welche die farbcodierte Folge für die Fotorezeptorvorrichtung (350) in der Gestalt von Lichtblitzen in vorbestimmten Zeitintervallen darstellt, nachdem eine räumliche Nähe des Fotorezeptors **durch** den Näherungssensor identifiziert wurde,
wobei die mobile Vorrichtung die gepaarte Verbindung mit der Fotorezeptorvorrichtung akzeptiert oder einleitet, wenn Decodieren der farbcodierten Ziffernfolge **durch** die Fotorezeptorvorrichtung einmal erfolgreich ist.

10. Mobile Vorrichtung nach Anspruch 9, wobei
das Kommunikationsmodul (320) eingerichtet ist, um eine gepaarte Verbindung mit der Fotorezeptorvorrichtung einzuleiten.

11. Fotorezeptorvorrichtung (350), um eine farbcodierte Ziffernfolge, deren Ziffern codierte Informationen umfassen, von einer mobilen Vorrichtung (305) in der Gestalt von Lichtblitzen in vorbestimmten Zeitintervallen zu empfangen, ein Kommunikationsmodul (360) zum Implementieren eines Paarungsprozesses zwischen der Fotorezeptorvorrichtung und der mobilen Vorrichtung umfassend, wobei der Fotorezeptor **gekennzeichnet ist durch**:
mindestens einen optischen Sensor (355), welcher eingerichtet ist, um eine farbcodierte Folge von der mobilen Vorrichtung zu empfangen, nachdem eine räumliche Nähe des Fotorezeptors **durch** einen Näherungssensor der mobilen Vorrichtung **durch** Bestimmen identifiziert wird, dass die mobile Vorrichtung in der Umgebung des Fotorezeptors ist;
einen Decodierer, welcher eingerichtet ist, um die farbcodierte Folge zu decodieren und eine Bitfolge zu erzeugen, und
ein Kommunikationsmodul (360), welches eingerichtet ist, um eine gepaarte Verbindung mit der mobilen Vorrichtung einzuleiten, wenn die farbcodierte Folge decodiert ist, und
wobei die Fotorezeptorvorrichtung eine Verkaufsautomatenvorrichtung umfasst.

12. Sicheres Kommunikationssystem, Folgendes umfassend:
eine mobile Vorrichtung (305) nach einem der Ansprüche 9 bis 10,
eine Fotorezeptorvorrichtung, um eine Produkt- oder Dienstanfrage von der mobilen Vorrichtung zu empfangen; und
ein Autorisierungsnetzwerk, um eine Autorisierungsanfrage von der mobilen Vorrichtung zu empfangen und als Reaktion einen Benutzer oder eine Bezahlung an der Fotorezeptorvorrichtung zu autorisieren.

13. Sicheres Kommunikationssystem nach Anspruch 12, wobei die Fotorezeptorvorrichtung ein Verkaufsautomat ist und die Produkt- oder Dienstanfrage eine Anfrage ist, ein Produkt oder einen Dienst zu kaufen, und das Autorisierungsnetzwerk ein Bezahlnetzwerk (515) ist.

## Revendications

1. Procédé de communication sécurisée d'une séquence de chiffres codée en couleur, lesquels chiffres comprennent des informations codées, depuis un écran d'un dispositif mobile vers un dispositif photorécepteur, comprenant la préparation (210) de la séquence de chiffres codée en couleur au niveau du dispositif mobile, le procédé est **caractérisé par**
l'identification (110) de la proximité, par un capteur de proximité du dispositif mobile, du dispositif photorécepteur en déterminant que le dispositif mobile se trouve à proximité du photorécepteur ;
la présentation (225) de la séquence de chiffres codée en couleur sur l'écran du dispositif mobile sous la forme de flashs lumineux à des intervalles de temps prédéterminés après identification de la proximité du dispositif photorécepteur;
le lancement (235) d'une connexion d'appariement entre le dispositif mobile et le dispositif photorécepteur une fois le décodage (230) par le dispositif photorécepteur de la séquence de chiffres codée en couleur réussi, et l'exécution d'une transaction une fois l'appariement réussi ; et dans lequel la communication avec le dispositif photorécepteur comprend la communication avec un dispositif de vente.

2. Procédé selon la revendication 1, dans lequel la connexion d'appariement est une connexion sans fil.

3. Procédé selon la revendication 2, dans lequel la connexion sans fil est une connexion Bluetooth.

4. Procédé selon la revendication 1, comprenant en outre
l'envoi d'une demande de libération d'un produit ou d'un service ;
la facilitation d'une communication sécurisée entre le dispositif photorécepteur et une entité financière distante pour confirmer que la demande est une demande valide ;
la réception d'une confirmation de sortie du produit ou du service lorsque la demande est validée.

5. Procédé selon la revendication 4, dans lequel la communication entre le dispositif photorécepteur et l'entité financière tierce est mise en oeuvre via le dispositif mobile couplé.

6. Procédé selon une quelconque des revendications ci-dessus, dans lequel la préparation d'une séquence de chiffres codée en couleur comprend :
la demande d'u moins une partie de la séquence de chiffres à un tiers de confiance ;
la réception d'au moins une partie de la séquence de chiffres sur le dispositif mobile ;
le codage de la séquence de chiffres dans un format codé en couleur.

7. Procédé selon la revendication 6, **caractérisé en ce que** la demande d'une séquence de chiffres à un tiers de confiance comprend :
la préparation d'un message comprenant au moins un identifiant du dispositif mobile et un indicateur associé au dispositif photorécepteur ;
la transmission dudit message au tiers de confiance.

8. Procédé selon la revendication 7, dans lequel ledit indicateur comprend une valeur monétaire pour un produit ou un service proposé par le dispositif photorécepteur.

9. Dispositif mobile (305) pour communiquer une séquence codée en couleur de chiffres, lesquels chiffres comprennent des informations codées, à un dispositif photorécepteur (350), le dispositif mobile comprend un module de communication (320) pour mettre en oeuvre un processus d'appariement entre le dispositif mobile et le dispositif photorécepteur (350) et un module de codage couleur pour recevoir une séquence de chiffres et générer une séquence codée couleur correspondant à la séquence de chiffres reçue, le dispositif mobile (305) est **caractérisé par**
un capteur de proximité (325) adapté pour identifier la proximité du photorécepteur en déterminant que le dispositif mobile (305) se trouve à proximité du photorécepteur ; et
un écran (310) présentant la séquence codée en couleurs au dispositif photorécepteur (350) sous la forme de flashs lumineux à des intervalles de temps prédéterminés après que la proximité du photorécepteur a été identifiée par le capteur de proximité,
dans lequel le dispositif mobile accepte ou lance la connexion d'appariement avec le dispositif photorécepteur une fois que le décodage par le dispositif photorécepteur de la séquence de chiffres codée en couleur est réussi.

10. Dispositif mobile selon la revendication 9, dans lequel le module de communication (320) est adapté pour lancer une connexion d'appariement avec le dispositif photorécepteur.

11. Dispositif photorécepteur (350) pour recevoir une séquence de chiffres codée en couleur, lesquels chiffres comprennent des informations codées, provenant d'un dispositif mobile (305) sous forme de flashs lumineux à intervalles de temps prédéterminés, comprenant un module de communication (360) pour mettre en oeuvre un processus d'appariement entre le dispositif photorécepteur et le dispositif mobile, le photorécepteur est **caractérisé par**
un ou plusieurs capteurs optiques (355) adaptés pour recevoir une séquence codée en couleur provenant du dispositif mobile après que la proximité du photorécepteur est identifiée par un capteur de proximité du dispositif mobile en déterminant que le dispositif mobile se trouve à proximité du photorécepteur ;
un décodeur adapté pour décoder la séquence codée en couleur et générer une séquence de bits et
un module de communication (360) adapté pour lancer une connexion d'appariement avec le dispositif mobile lorsque la séquence codée en couleurs est décodée, et dans lequel le dispositif photorécepteur comprend un dispositif de vente.

12. Système de communication sécurisé, comprenant :
un dispositif mobile (305) selon une quelconque des revendications 9 à 10,
un dispositif photorécepteur, pour recevoir une demande de produit ou de service de l'appareil mobile ; et
un réseau d'autorisation, pour recevoir une demande d'autorisation provenant du dispositif mobile et autoriser un utilisateur ou un paiement au dispositif photorécepteur en réponse.

13. Système de communication sécurisé selon la revendication 12, dans lequel le dispositif photorécepteur est un distributeur automatique et la demande de produit ou de service est une demande d'achat d'un produit ou d'un service et le réseau d'autorisation est un réseau de paiement (515).
